(19) Europäisches Patentamt / European Patent Office / Office européen des brevets

(11) **EP 3 036 280 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **14744364.2**

(22) Anmeldetag: **29.07.2014**

(51) Int Cl.:
**B29C 47/00** (2006.01)  **B29K 23/00** (2006.01)
**B29L 31/00** (2006.01)  **C08F 210/02** (2006.01)
**C08K 5/00** (2006.01)  **C08K 5/09** (2006.01)
**C08K 5/5419** (2006.01)  **C08K 5/5425** (2006.01)
**C08K 5/14** (2006.01)

(86) Internationale Anmeldenummer:
**PCT/EP2014/066297**

(87) Internationale Veröffentlichungsnummer:
**WO 2015/024744 (26.02.2015 Gazette 2015/08)**

(54) **ZINN-FREIE KATALYSATOR-HALTIGE ZUSAMMENSETZUNG FÜR EINEN MONOSIL-PROZESS MIT OPTIMIERTER PROZESSCHARAKTERISTIK**

TINFREE AND CATALYST CONTAINING COMPOSITION USEFUL IN A MONOSIL-PROCESS

COMPOSITION CONTENANT UN CATALYSATEUR SANS ÉTAIN UTILE POUR UN PROCESSUS MONOSIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2013 DE 102013216504**

(43) Veröffentlichungstag der Anmeldung:
**29.06.2016 Patentblatt 2016/26**

(73) Patentinhaber: **Evonik Degussa GmbH**
**45128 Essen (DE)**

(72) Erfinder:
• **IOANNIDIS, Aristidis**
**79618 Rheinfelden (DE)**
• **MIHAILESCU, Ioana-Elena**
**79618 Rheinfelden (DE)**
• **BIELAWSKI, Bastian**
**79618 Rheinfelden (DE)**
• **MACK, Helmut**
**83278 Traunstein (DE)**
• **WEISSENBACH, Kerstin**
**77723 Gengenbach (DE)**

(74) Vertreter: **Evonik Patent Association**
**c/o Evonik Industries AG**
**IP Management**
**Bau 1042A/PB 15**
**Paul-Baumann-Straße 1**
**45764 Marl (DE)**

(56) Entgegenhaltungen:
**EP-A1- 2 080 777    DE-A1-102008 041 918**

• **DATABASE CAPLUS [Online] CHEMICAL ABSTRACTS SERVICE, COLUMBUS, OHIO, US 24 Februar 2006 WAKABAYASHI, YOSHIISA: 'ORGANIC TIN-FREE CURING COMPOSITIONS AND THEIR ADHESIVES AND SEALING MATERIALS', XP002729382 Retrieved from STN DATABASE ACCESSION NO. 2006:170073 -& JP 2006 052353 A (KANEKA CORP) 23. Februar 2006 (2006-02-23)**
• **MAILLEFER ET AL: "Monosil: the one step process of mixing and extruding crosslinkable polyolefins", TECHNICAL PAPERS, REGIONAL TECHNICAL CONFERENCE-SOCIETY OF PLASTICS ENGINEERS,, 1. Januar 2006 (2006-01-01), Seiten 12-24, XP009179981, ISSN: 0099-3492**

EP 3 036 280 B1

**Beschreibung**

Die Erfindung betrifft eine spezielle Zusammensetzung für den Einsatz bei einem Monosil-Prozess zur Vernetzung von thermoplastischen Polyolefinen, wobei die Zusammensetzung einen Gehalt an 2-Ethylhexansäure $[H_3C(CH_2)_3CH(C_2H_5)COOH]$, einen Gehalt an mindestens einem einfach ungesättigten organofunktionellen Alkoxysilan und einen Gehalt an mindestens einem Radikalbildner umfasst. Ferner betrifft die vorliegende Erfindung eine Verfahren zur Herstellung silanvernetzter Formkörper bzw. Produkte auf der Basis von thermoplastischen Polyolefinen unter Einsatz bzw. Verwendung der ausgewählten Zusammensetzung in einem Monosil-Prozess.

Zur Herstellung von gefüllten und ungefüllten Polymercompounds, insbesondere von Polyethylen (PE) und dessen Co-Polymeren, ist es bekannt zur Vernetzung von silangepfropften oder silan-co-polymerisierten Polyethylenen als Silanolkondensationskatalysatoren Organozinn-Verbindungen oder aromatische Sulphonsäuren (Ambicat™, Fa. Borealis) einzusetzen.

Zur Durchführung kann beispielsweise nach dem Sioplas-Prozess-Verfahren werden. Dabei handelt es sich um ein Zweischrittverfahren. Im ersten Schritt erfolgt die Herstellung eines Polymercompounds, wobei im Wesentlichen das thermoplastische Polymer unter Zusatz eines Gemischs aus einem einfach ungesättigten Organoalkoxysilan, wie Vinyltrialkoxysilan, und eines Radikalbildners gepfropft wird. Ein so erhaltener Polymercompound kann in einem zweiten Schritt unter Zusatz eines Hydrolyse- und Kondensationskatalysators, in der Regel eine Organozinn-Verbindung, mittel Extrusion zu einem Formkörper, beispielsweise ein Rohr oder ein Kabel, geformt und anschließend unter Feuchteeinfluss vernetzt werden.

Ebenfalls kann die Herstellung eines geformten Produkts auf Basis eines thermoplastischen Polymers in einem Einschrittverfahren, dem sogenannten Monosil-Prozess, erfolgen. Dabei wird im Wesentlichen das thermoplastische Polymer unter Zusatz eines Gemischs aus einem einfach ungesättigten Organoalkoxysilan, wie Vinyltrialkoxysilan, einem Radikalbildners und einem Hydrolyse- und Kondensationskatalysator, beispielsweise eine Organozinn-Verbindung, in einem beheizten Schneckenextruder umgesetzt, geformt und der Formkörper anschließend unter Feuchteeinfluss, beispielsweise in einem Wasserbad, vernetzt.

Der Einsatz weiterer Zusätze bzw. Additive, wie Füllstoffe, Pigmente, Antioxidatien, Metalldesaktivatoren, UV-Stablisatoren, farbgebende Komponenten, weiterer Verarbeitungshilfsmittel bzw. -stoffe, beispielsweise monomere Organoalkoxysilane oder oligomere alkyl- und/oder vinyl-funktionelle Alkoxysiloxane, beispielsweise als Wasserfänger oder als so genannter "Scorch Retarder", wie Vinyltrimethoxysilan, Vinyltriethoxysilan, Octyltrimethoxysilan oder Octyltriethoxysilan oder Hexadecyltrimethoxysilan oder Hexadecyltriethoxysilan oder Octyl/methoxysiloxane oder Octyl/ethoxysiloxane oder Vinyl/methoxysiloxane oder Vinyl/ethoxysiloxane oder Octyl/vinyl/methoxysiloxane oder Octyl/vinyl/ethoxysiloxane, u.v.m. sind bei beiden zuvor genannten Verfahren möglich.

Nachteilig bei den Organozinn-Verbindungen ist jedoch deren signifikante Toxizität, während die Sulphonsäuren sich durch ihren stechenden Geruch bemerkbar machen, der sich durch alle Prozessstufen bis in das Endprodukt fortsetzt. Durch reaktionsbedingte Nebenprodukte sind die mit Sulphonsäuren vernetzten Polymercompounds in der Regel nicht geeignet im Lebensmittelbereich oder im Bereich der Trinkwasserversorgung eingesetzt zu werden, beispielsweise zur Herstellung von Trinkwasserrohren. Übliche Zinn-haltige Silanolkondensations-katalysatoren sind Dibutylzinndilaurat (dibutyltindilaurate, DBTDL) und Dioctylzinndilaurat (diocytyltindilaurate, DOTL), die über ihre Koordinationssphäre als Katalysator wirken.

So ist bekannt zur Herstellung von feuchtigkeitsvernetzbaren Polymeren Silane in Gegenwart von Radikalbildnern auf Polymerketten aufzupfropfen und nach der Formgebung die Feuchtigkeitsvernetzung in Gegenwart der genannten Silanhydrolysekatalysatoren und/oder Silanolkondensationskatalysatoren durchzuführen. Die Feuchtigkeitsvernetzung von Polymeren mit hydrolysierbaren ungesättigten Silanen wird weltweit zur Herstellung von Kabeln, Rohren, Schäumen usw. eingesetzt. Verfahren dieser Art sind unter den Namen Sioplas-Prozess (DE 19 63 571 C3, DE 21 51 270 C3, US 3,646,155) und Monosil-Prozess (DE 25 54 525 C3, US 4,117,195) bekannt. Während beim Monosil-Verfahren der Vernetzungskatalysator bereits beim ersten Verarbeitungsschritt zugesetzt wird, erfolgt beim Sioplas-Verfahren der Zusatz des Vernetzungskatalysators erst im nachfolgenden Schritt. Zudem können vinyl-funktionelle Silane zusammen mit den Monomeren und/oder Prepolymeren direkt zu dem Basispolymer copolymerisiert oder durch so genannte Pfropfung auf die Polymerketten angekoppelt werden.

Die EP 207 627 A offenbart weitere zinn- enthaltende Katalysatorsysteme und damit modifizierte Co-Polymere basierend auf der Reaktion von Dibutylzinnoxid mit EthylenAcrylsäure-Co-Polymeren. Die JP 58013613 verwendet $Sn(Acetyl)_2$ als Katalysator und die JP 05162237 lehrt die Verwendung von Zinn-, Zink- oder Kobaltcarboxylaten zusammen mit gebundenen Kohlenwasserstoff-Gruppen als Silanolkondensationskatalysatoren, wie Dioctylzinnmaleat, Monobutylzinnoxid, Dimethyloxybutylzinn oder Dibutylzinndiacetat. Die JP 3656545 setzt zur Vernetzung Zink und Aluminiumseifen, wie Zinkoctylat, Aluminiumlaurat ein. Die JP 1042509 offenbart zur Vernetzung von Silanen ebenfalls die Verwendung von organischen Zinn-Verbindungen, aber auch auf Titan-Chelat-Verbindungen basierende Alkyltitansäureester. Aus der JP 09-040713 ist die Herstellung von mit Silanen modifizierten Polyolefinen mittels Umsetzung eines Polyolefins und zwei modifizierten Silanverbindungen unter Verwendung einer organischen Säure als Silanolkondensationskatalysator bekannt.

WO 2010/028876 A1 ist im Wesentlichen auf die Metall-freie, insbesondere Zinn-freie Bereitstellung von thermoplastischen Produkten gerichtet und offenbart sehr umfassend eine Zusammensetzung einer einfach ungesättigten Silan-Verbindung und einer organischen Säure, insbesondere gesättigte oder ungesättigte Fettsäuren, oder einer eine Säure freisetzende Vorläuferverbindung einer organischen Säure sowie Verfahren zur Herstellung von Polymercompounds, wie Granulaten und/oder Fertigprodukten, aus thermoplastischen Basispolymeren und/oder Monomeren und/oder Prepolymer der thermoplastischen Basispolymere unter Verwendung der Zusammensetzung, der organischen Säure oder der diese Säure freisetzenden Vorläuferverbindung. Ferner offenbart die WO 2010/028876 A1 so hergestellte Polymere, gefüllten Kunststoffe, beispielsweise als Granulat, Fertigprodukt, Formkörper und/oder Artikel, wie Rohre oder Kabel. Zudem wird ein Kit enthaltend eine dort genannte Zusammenfassung offenbart. Diese Lehre ist bevorzugt auf Sioplas-Verfahren gerichtet, wie auch aus den Beispielen der WO 2010/028876 A1 zu entnehmen ist. Ferner werden Buttersäure und Caprylsäure aufgrund ihres stechenden Geruchs als ungeeignet herausgestellt, insbesondere bei Trinkwasserrohren. Kürzere Carbonsäuren schließt der Fachmann auch aufgrund ihrer Korrosivität aus. Gemäß der Lehre aus WO 2010/028876 A1 sind Caprinsäure, Laurinsäure, Myristinsäure sowie Behensäure zweckmäßig zu verwenden; bezüglich Myristinsäure vgl. auch EP 2 465 897 B1.

An die beim Monosil-Verfahren eingesetzte Silanzubereitung aus einem einfach ungesättigten Organoalkoxysilan, einem Radikalbildners und einem Hydrolyse- und Kondensationskatalysator werden vom Anwender spezielle Anforderungen gestellt, so, dass die besagte Silanzubereitungen (nachfolgend auch kurz Silangemisch oder Gemisch oder Zusammensetzung genannt) eine homogene klare Flüssigkeit und auch bei einer für gemäßigte Breiten "winterlichen" Temperatur, insbesondere im frostfreien Bereich um 6 °C, einphasig ist, d. h. sich nicht entmischt und eine Lagerstabilität bei Raumtemperatur von 6 Monaten besitzt und keine Ausscheidung bzw. Ausfällungen von Komponenten auch bei kühlerer Lagerung auftreten. Darüber hinaus sollte das Gemisch mit Hinblick auf die Einsatzstoffverhältnisse im Monosil-Verfahren mindestens einen Gehalt von 3 Gew.-% Hydrolyse- und Kondensationskatalysator aufweisen, um eine hinreichende Vernetzung im Produkt für eine angestrebte Produktqualität gewährleisten zu können.

Aufgabe der vorliegenden Erfindung war es, eine für den Monosil-Prozess speziell geeignete Zusammensetzung aufzufinden und bereitzustellen, die mindestens ein einfach ungesättigtes Organoalkoxysilan, mindestens einen Radikalbildner und mindestens einen Zinn-freien Hydrolyse- bzw. Vernetzungskatalysator, insbesondere aus der Reihe der organischen Säuren, enthält und die darüber hinaus den genannten Anforderungen bzgl. des Monosil-Prozesses genügt, um in möglichst einfacher und wirtschaftlicher Weise Zinn-freie Produkte auf der Basis thermoplastischer Polyolefine nach dem Monosil-Verfahren in hoher Qualität herstellen zu können, insbesondere für Kabelanwendungen.

Gelöst wird die Aufgabe durch die erfindungsgemäße Zusammensetzung entsprechend den Merkmalen des Anspruchs 1, das erfindungsgemäße Verfahren mit den Merkmalen des Anspruchs 12 sowie den erfindungsgemäßen Erzeugnissen entsprechend den Merkmalen des Patentanspruchs 14 und auch durch die Verwendung nach Anspruch 15. Bevorzugte Ausführungsformen sind den Unteransprüchen und der Beschreibung zu entnehmen.

So wurde in überraschender Weise gefunden, dass 2-Ethylhexansäure [$H_3C(CH_2)_3CH(C_2H_5)COOH$] in einem einfach ungesättigten organofunktionellen Alkoxysilan, insbesondere in Vinyltrimethoxysilan (VTMO), Vinyltriethoxysilan (VTEO) sowie 3-Methacryloxypropyltrimethoxysilan (MEMO), mit hohen Anteilen bis hin zu 60 Gew.-% löslich und über mindestens 6 Monate lagerstabil ist und bei einer solche Lösung auch bei einer Lagertemperatur im Bereich von 6 °C keine Ausscheidungen auftreten. So wurde ferner gefunden, dass 2-Ethylhexansäure auch nach 18 Stunden bei 1 °C bis hin zu einem Gehalt von 60 Gew.-% in VTMO, VTEO sowie MEMO in Lösung bleibt. Demgegenüber weist die in EP 2 465 897 B1 als bevorzugt herausgestellte Myristinsäure leider schon bei Anteilen von 7,8 Gew.-% in Vinyltrimethoxysilan bei einer Lagertemperatur von 6 °C erhebliche Ausscheidungen auf; längere Fettsäuren, wie die Laurinsäure und Behensäure, haben damit wohl eine mindestens vergleichbar schlechte Lösungscharakteristik wie Myristinsäure. Darüber hinaus bietet die 2-Ethylhexansäure im Gegensatz zur Caprinsäure den Vorteil, dass sie bei Raumtemperatur (Schmelzpunkt -59 °C) eine Flüssigkeit ist, die sich im alltäglichen Betrieb und auch bei sehr tiefen Betriebstemperaturen sehr einfach handhaben lässt, vorzugsweise beim Fördern und Dosieren. Die Caprinsäure hingegen mit einem Schmelzpunkt von > 31 °C würde eine aufwändige Herausforderungen an die Handhabung im Produktionsalltag darstellen. Um eine flüssige Dosierung zu gewährleisten, müsste die Caprinsäure unter großem energetischen Aufwand durch Erwärmen permanent flüssig gehalten werden. Das betrifft nicht nur den Behälter selbst sondern auch alle Zuleitungen und Pumpen, die mit der Caprinsäure in Kontakt kommen. Eine andere Möglichkeit wäre die Zugabe der Caprinsäure als Feststoff. In diesem Fall müsste die Formstabilität der Caprinsäure durch permanentes Kühlen unterhalb der Schmelztemperatur gewährleistet werden. Auch dies ist ein energetisch und technisch sehr aufwändiger und wenig praktikabler Vorgang, um die Rieselfähigkeit des Feststoffs zu gewährleisten; so müssten beispielsweise alle Fördereinrichtungen permanent gekühlt werden. Eine weitere Herausforderung stellt die Löslichkeit der Caprinsäure in Vinyltrimethoxysilan bei niedrigen Temperaturen von ca. 1 °C dar; hier ist eine Limitierung der Löslichkeit von Caprinsäure in Vinyltrimethoxysilan festzustellen, siehe nachfolgendes Beispiel 2. Partielle Ausfällungen, wie sie im Beispiel 2D auftreten, führen zu einer Entmischung innerhalb der Produktgebinde - üblicherweise Fässer oder IBC (Intermediate Bulk Container). Um solchen Entmischungsvorgängen vorzubeugen bzw. die Homogenität der Mischung sicherzustellen, müsste während der Verarbeitung der Silanmischungen der Gebindeinhalt permanent gerührt werden; ein zusätzlicher nicht unerheblicher Aufwand bezüglich Investitionen und Energieverbrauch, der im Falle des Monosil-Prozesses für die Industrie nicht akzeptabel ist. Im Vergleich hierzu bleibt eine Mischung von 60 Gew.-% 2-Ethylhexansäure und 40 Gew.-% Vinyltrimethoxysilan auch nach 18 Stunden bei 1 °C eine klare Lösung, siehe Beispiel 3.

Des Weiteren wurde überraschenderweise gefunden, dass die Löslichkeit von 2-Ethylhexansäure erheblich besser ist im Vergleich zur Caprylsäure; dies gilt sowohl in Lösungen nur mit ungesättigten Alkoxysilanen, siehe nachfolgendes Beispiel 3, als auch in vorliegenden Zusammensetzungen nach Lagerung bei sehr niedrigen Temperaturen (18 Stunden bei 1 °C), vgl. Beispiel 4.

So stellen vorliegende Zusammensetzungen enthaltend einen Gehalt an einfach ungesättigtem Organotrialkoxysilan, insbesondere in Vinyltrimethoxysilan (VTMO), Vinyltriethoxysilan (VTEO) sowie 3-Methacryloxypropyltrimethoxysilan (MEMO) mit hohen Anteilen an 2-Ethylhexansäure bis hin zu 60 Gew.-% auch bei 6 °C noch eine einphasige klare Flüssigkeit dar.

Darüber hinaus zeichnen sich erfindungsgemäße Zusammensetzungen durch hervorragende Anwendungseigenschaften im Monosil-Prozess und einer ausgezeichneten Qualität so erhaltener Produkte aus.

Auf dieser Grundlage konnten in vorteilhafter Weise Zusammensetzungen mit

(i) einem Gehalt an 2-Ethylhexansäure [$H_3C(CH_2)_3CH(C_2H_5)COOH$] bis 60 Gew.-%,
(ii) einem Gehalt an mindestens einem einfach ungesättigten organofunktionellen Alkoxysilan der allgemeinen Formel I

$$A\text{-}SiR^2_x(OR^1)_{3-x} \qquad (I),$$

wobei

$R^1$ unabhängig voneinander für einen linearen oder verzweigten Kohlenwasserstoffrest mit 1 bis 4 C-Atomen steht,
$R^2$ für Methyl steht und x gleich 0 oder 1 ist und
A eine einwertige Olefin-Gruppe der Formel $(R^3)_2C=C(R^3)\text{-}M_k\text{-}$ mit k gleich 0 oder 1 darstellt, worin Gruppen $R^3$ gleich oder verschieden sind und $R^3$ ein Wasserstoffatom oder eine Methylgruppe ist und die Gruppe M einer Gruppe aus der Reihe $-CH_2-$, $-(CH_2)_2-$, $-(CH_2)_3-$ oder $-C(O)O-(CH_2)_3-$ entspricht,

(iii) einem Gehalt an mindestens einem Radikalbildner und
(iv) optional einem Gehalt an mindestens einer weiteren Komponente,

wobei alle Komponenten (i) bis (iv) in Summe 100 Gew.-% ergeben, bereitgestellt werden.

Versuche, bei denen erfindungsgemäße Zusammensetzungen im Monosil-Prozess für die Herstellung von Zinn-freien Produkten auf der Basis thermoplastischer Polyolefine angewendet wurden, haben auf vorteilhafter Weise belegt, dass sich nun auch Dosiermengen Zinn-freier Silanzubereitungen im Monosil-Prozess realisieren lassen, die industriell von Bedeutung sind. Dabei hat sich in besonders überraschender Weise gezeigt, dass die Verarbeitungseigenschaften bzw. Qualität von Produkten auf Basis thermoplastischer Polyolefine durch den Einsatz einer 2-Ethylhexansäure-haltigen Silanzubereitung gegenüber einer entsprechenden Caprylsäure-haligen Silanzubereitung bzw. Zusammensetzung, wie sie in einer noch unveröffentlichten deutschen Parallelanmeldung dargelegt wird, nochmals deutlich verbessert werden kann. Auch kann durch den Einsatz von 2-Ethylhexansäure der Anteil an Katalysatorkomponente in der Silanzubereitung gegenüber einer Caprylsäure-haltigen geringer eingestellt werden ohne die geforderten Vernetzungseigenschaften im Produkt zu verschlechtern.

Gegenstand der Erfindung ist somit eine Zusammensetzung für den Einsatz bei einem Monosil-Prozess zur Vernetzung von thermoplastischen Polyolefinen,
die dadurch gekennzeichnet ist,
dass die Zusammensetzung

(i) einen Gehalt an 2-Ethylhexansäure [$H_3C(CH_2)_3CH(C_2H_5)COOH$] von 5 bis 60 Gew.-%,
(ii) einen Gehalt an mindestens einem einfach ungesättigten organofunktionellen Alkoxysilan der allgemeinen Formel I

$$A\text{-}SiR^2_x(OR^1)_{3-x} \qquad (I),$$

wobei

$R^1$ unabhängig voneinander für einen linearen oder verzweigten Kohlenwasserstoffrest mit 1 bis 4 C-Atomen steht,

$R^2$ für Methyl steht und x gleich 0 oder 1 ist und

A eine einwertige Olefin-Gruppe der Formel $(R^3)_2C=C(R^3)-M_k-$ mit k gleich 0 oder 1 darstellt, worin Gruppen $R^3$ gleich oder verschieden sind und $R^3$ ein Wasserstoffatom oder eine Methylgruppe ist und die Gruppe M einer Gruppe aus der Reihe $-CH_2-$, $-(CH_2)_2-$, $-(CH_2)_3-$ oder $-C(O)O-(CH_2)_3-$ entspricht,

(iii) einen Gehalt an mindestens einem Radikalbildner und

(iv) optional einen Gehalt an mindestens einer weiteren Komponente umfasst, wobei alle Komponenten (i) bis (iv) in Summe 100 Gew.-% ergeben.

Bei einer erfindungsgemäßen Zusammensetzung beträgt der Gehalt an 2-Ethylhexansäure $[H_3C(CH_2)_3CH(C_2H_5)COOH]$ als Komponente (i) vorzugsweise 9 bis 55 Gew.-%, besonders vorzugsweise 15 bis 45 Gew.-%, insbesondere ≥ 20 bis 40 Gew.-% einschließlich aller Zahlenwert, die dazwischen liegen, insbesondere -aber nicht ausschließlich- seine erwähnt 21, 22, 23, 24, 25, 26, 27, 28, 29, 30, 31, 32, 33, 34, 35, 36, 37, 38 sowie 39 Gew.-% - um nur einige zu nennen.

Ferner beträgt der Gehalt an Komponente (ii) in einer erfindungsgemäßen Zusammensetzung bevorzugt 15 bis 94,95 Gew.-%. Dazu wählt man aus der Reihe der ungesättigten organofunktionellen Alkoxysilane der allgemeinen Formel I vorzugsweise Vinyltrimethoxysilan, Vinyltriethoxysilan oder 3-Methacryloxytrimethoxysilan als Komponente (ii) aus.

Der Radikalbildner als Komponente (iii) in einer erfindungsgemäßen Zusammensetzung ist geeigneterweise ein organisches Peroxid und/oder ein organischer Perester und vorteilhaft ausgewählt aus der Reihe tert.-Butylperoxypivalat, tert.-Butylperoxy-2-ethylhexanoat, Dicumylperoxid, Di-tert.-butylperoxid, tert.-Butylcumylperoxid, Di(tert.-butylperoxy-isopropyl)benzol, 1,3-Di(2-tert.-butylperoxy-isopropyl)benzol, 1,4-Di(2-tert.-butylperoxy-isopropyl)benzol, 2,5-Dimethyl-2,5-bis(tert.-butylperoxy)hexin(3), Di-tert.-amylperoxid, 1,3,5-Tris(2-tert.-butylperoxy-isopropyl)benzol, 1-Phenyl-1-tert.-butylperoxyphthalid, alpha,alpha'-Bis(tert.-butylperoxy)-diisopropyl-benzol, 2,5-Dimethyl-2,5-di tert.-butylperoxy-hexan, 1,1-Di(tert.-butylperoxy)-3,3,5-trimethylcyclohexan, n-Butyl-4,4-di(tert.-butylperoxy)valerat, Ethyl-3,3-di(tert.-butylperoxy)butytat, 3,3,6,9,9-Hexamethyl-1,2,4,5-tetraoxa-cyclononan oder eine Mischung mindestens zwei der zuvor genannten Radikalbildner.

Vorzugsweise beträgt der Gehalt an Komponente (iii) in einer erfindungsgemäßen Zusammensetzung 0,05 bis 10 Gew.-%, besonders vorzugsweise 1 bis 9 Gew.-%.

Darüber hinaus kann eine erfindungsgemäße Zusammensetzung als Komponente (iv) mindestens einen Zusatzstoff und/oder Mischungen dieser enthalten.

So ist beispielsweise -aber nicht ausschließlich- in einer erfindungsgemäßen Zusammensetzung als Komponente (iv) mindestens ein Zusatzstoff aus der Reihe Pentaerythrityl-tetrakis [3-(3,5-bis(1,1-dimethylethyl)-4-hydroxyphenyl)propionate], 2,6 Di-tert.-butyl-4-methylphenol, Octadecyl-3-(3,5-di-tert.butyl-4-hydroxyphenyl)propionat, 4,4'-Bis-(1,1-dimethylbenzyl)-diphenylamin, N,N'-Bis(3-(3,5-di-tert.butyl-4-hydroxyphenyl)-propionyl)hydrazin, 6,6'-Di-tert-butyl-2,2'thiodi-p-kresol, 1,3,5-Trimethyl-2,4,6-tris-(3,5-di-tert.butyl-4-hydroxybenzyl)benzol, Tris-(2-tert.-butyl-4-thio(-2'-methyl-4-hydroxy-5'-tert.butyl)phenyl-5-methyl)phenylphosphit sowie 2,2,4-Trimethyl-1,2-dihydrochinolin (polymerisiert).

Die erfindungsgemäße Zusammensetzung wird in der Regel flüssig eingesetzt. In einigen Fällen ist es jedoch auch vorteilhaft - für eine noch leichtere Dosierbarkeit - eine erfindungsgemäße Zusammensetzung auf einem festen Träger in einer festen, rieselfähige Formulierung bereitzustellen, beispielsweise auf einem organischen oder anorganischen Trägermaterial. Der Träger kann porös, partikelförmig, quellbar oder gegebenenfalls schaumförmig vorliegen. Als Trägermaterial eignet sich insbesondere Polyolefine, wie PE, PP oder Polymerblends oder anorganische oder mineralische Materialien, die vorteilhaft auch verstärkend, streckend sowie flammhemmend sein können. Das Trägermaterialien kann somit auch mindestens ein Füllstoff sein, wie er bei gefüllten thermoplastischen Polyolefinenprodukten üblich ist, solche sind nachstehend näher spezifiziert: Beispielsweise Titandioxid ($TiO_2$), Talkum, Ton, Quarz, Kaolin, Aluminiumhydroxid, Magnesiumhydroxid, Bentonit, Montmorillonit, Glimmer (Muskovitglimmer), Calciumcarbonat (Kreide, Dolomit), Farben, Pigmente, Talkum, Ruß, $SiO_2$, Fällungskieselsäure, pyrogene Kieselsäure, Aluminiumoxide, wie alpha- und/oder gamma-Aluminiumoxid, Aluminiumoxidhydroxide, Böhmit, Barit, Bariumsulfat, Kalk, Silikate, Aluminate, Aluminiumsilikate und/oder ZnO oder Mischungen dieser.

Im Einzelnen seien als bevorzugte Trägermaterialien erwähnt: ATH (Aluminiumtrihydroxid, $Al(OH)_3$), Magne-siumhydroxid ($Mg(OH)_2$) oder pyrogene Kieselsäure, die im großtechnischen Maßstab durch kontinuierliche Hydrolyse von Siliciumtetrachlorid in einer Knallgasflamme hergestellt wird. Die pyrogene Kieselsäure ist eine amorphe Modifikation des Siliciumdioxids in Form eines lockeren, bläulichen Pulvers. Die Teilchengröße liegt üblicherweise im Bereich von wenigen Nanometern, die spezifische Oberfläche ist daher groß und beträgt im Allgemeinen 50 bis 600 $m^2/g$. Die Aufnahme einer flüssigen erfindungsgemäßen Zusammensetzung beruht dabei im Wesentlichen auf Adsorption. Fällungskieselsäuren werden im Allgemeinen aus Natronwasserglas-Lösungen durch Neutralisation mit anorganischen Säuren unter kontrollierten Bedingungen hergestellt. Nach Abtrennung von der flüssigen Phase, Auswaschen und Trocknen wird das Rohprodukt feingemahlen, z. B. in Dampfstrahlmühlen. Auch Fällungskieselsäure ist ein weitgehendes amorphes Siliciumdioxid, das in der Regel eine spezifische Oberfläche von 50 bis 150 $m^2$/g besitzt. Calciumsilikat wird technisch im Allgemeinen durch Zusammenschmelzen von Quarz oder Kieselgur mit Calciumcarbonat bzw. -oxid oder durch Fällung von wässrigen Natriummetasilikat-Lösungen mit wasserlöslichen Calciumverbindungen hergestellt. Das sorgfältig getrocknete Produkt ist in der Regel porös und kann Wasser oder Öle bis zur fünffachen Gewichtsmenge aufnehmen. Ruß in seinen verschiedenen Handelsformen eignet sich ebenfalls als Trägermaterial z. B. zur Herstellung von schwarzen Kabelummantelungen.

Anorganische Trägermaterialien weisen geeigneterweise eine gewisse Porosität auf, beispielsweise rd. 10 Vol.-%. Die Aufnahme einer erfindungsgemäßen Zusammensetzung kann daher sowohl durch Adsorption an der Oberfläche als auch durch Absorption in den Poren erfolgen.

Poröse Polyolefine, wie Polyethylen (PE) oder Polypropylen (PP) sowie Copolymere, wie Ethylen-Copolymere mit an Kohlenstoff armen Alkenen, beispielsweise Propen, Buten, Hexen, Octen, oder Ethylenvinylacetat (EVA), werden durch spezielle Polymerisationstechniken und - verfahren hergestellt. Die Teilchengrößen liegen im Allgemeinen zwischen 3 und < 1 mm, und die Porosität kann über 50 Vol.-% betragen.

Feste Trägermaterialien können auf ihren Oberflächen Gruppen tragen, die mit den AlkoxyGruppen der ungesättigten Organosilan/-mischungen reagieren können. Im Ergebnis kann dadurch das Siliciumatom mit der daran gebundenen funktionellen Gruppe auf der Oberfläche chemisch fixiert werden. Solche Gruppen auf der Oberfläche des Füllstoffs sind insbesondere Hydroxylgruppen. Bevorzugte Füllstoffe sind dementsprechend Metallhydroxide mit stöchiometrischem Anteil oder, in ihren unterschiedlichen Entwässerungsstufen, mit substöchiometrischem Anteil an Hydroxylgruppen bis hin zu Oxiden mit vergleichsweise wenigen restlichen, aber durch DRIFT-IR-Spektroskopie nachweisbaren Hydroxylgruppen. Beispiele für geeignete Füllstoffe sind Aluminiumtrihydroxid (ATH), Aluminiumoxidhydroxid (AlOOH.aq), Magnesiumdihydroxid (MDH), Brucit, Huntit, Hydromagnesit, Glimmer und Montmorillonit. Ferner können als Füllstoff Calciumcarbonat, Talkum sowie Glasfasern eingesetzt werden. Des Weiteren können so genannte "char former", wie Ammoniumpolyphosphat, Stannate, Borate, Talk, oder solche in Kombination mit anderen Füllstoffen eingesetzt werden. Vorzugsweise liegen besagte Trägermaterialien bzw. Füllstoffe pulverförmig, partikulär, porös, quellbar oder gegebenenfalls schaumförmig vor.

Besonders bevorzugte Trägermaterialien sind somit poröse Polyolefine, wie PE, PP, oder Polymerblends, poröse Aluminiumhydroxide, Magnesiumhydroxide, pyrogene Kieselsäure, gefällte Kieselsäure sowie poröse Silikate.

Entsprechend weiterer bevorzugter Ausführungsformen kann eine Zusammensetzung im Sinne der vorliegenden Erfindung daher auch aus einer Auswahl der Komponenten (i), (ii) und (iii) sowie mindestens einer weiteren Komponente (iv) ausgewählt aus der Reihe der Zusatzstoffe, wie Antioxidatien, Stabilisatoren, wie Metalldesaktivatoren, UV-Stablisatoren, sowie weiterer Verarbeitungshilfsmittel bzw. -stoffe und/oder Mischungen dieser umfassen.

In einer besonders bevorzugten Ausführungsform umfasst eine erfindungsgemäße Zusammensetzung

(i) 9 bis 40 Gew.-% 2-Ethylhexansäure,
(ii) 15 bis 88 Gew.-% Vinyltrimethoxysilan (VTMO) oder Vinyltriethoxysilan (VTEO) oder 3-Methacryloxypropyltrimethoxysilan (MEMO),
(iii) 3 bis 10 Gew.-% Dicumylperoxid und
(iv) optional in Summe 0,05 bis 15 Gew.-% mindestens eines Zusatzstoffs oder mehrerer Zusatzstoffe,

wobei alle Komponenten (i) bis (iv) in Summe 100 Gew.-% ergeben.

Eine erfindungsgemäße Zusammensetzung kann somit als weitere Komponente (iv) vorteilhaft 0 bis 15 Gew.-% eines Metalldesaktivators oder Stabilisators aus der Reihe Pentaerythrityl-tetrakis [3-(3,5-bis(1,1-dimethylethyl)-4-hydroxyphenyl)propionate], 2,6 Di-tert.-butyl-4-methylphenol, Octadecyl-3-(3,5-di-tert.butyl-4-hydroxyphenyl)propionat, 4,4'-Bis-(1,1-dimethylbenzyl)-diphenylamin, N,N'-Bis(3-(3,5-di-tert.butyl-4-hydroxyphenyl)-propionyl)hydrazin, 6,6'-Di-tert-butyl-2,2'thiodi-p-kresol, 1,3,5-Trimethyl-2,4,6-tris-(3,5-di-tert.butyl-4-hydroxybenzyl)benzol, Tris-(2-tert.-butyl-4-thio(-2'-methyl-4-hydroxy-5'-tert.butyl)phenyl-5-methyl)phenylphosphit sowie 2,2,4-Trimethyl-1,2-dihydrochinolin (polymerisiert) enthalten, wobei alle Komponenten (i) bis (iv) in Summe 100 Gew.-% ergeben.

Darüber hinaus kann eine besagte erfindungsgemäße Zusammensetzung auch auf einem Träger (zuvor und nachfolgend auch als Trägermaterial bezeichnet) bereitgestellt werden, wobei der Anteil der erfindungsgemäßen Zusammensetzung, bezogen auf den Träger, vorteilhaft 10 bis 50 Gew.-% betragen kann und der Träger aus der Reihe der thermoplastischen Polyolefine oder anorganischer Trägermaterialen, wie sie oben angeführt sind, ausgewählt ist.

Geeigneterweise kann man eine erfindungsgemäße Zusammensetzung herstellen, indem man die Komponeneten (i) bis (iii) sowie optional ggf. (iv), sofern die Komponente (iv) in der Zubereitung aus den Komponenten (i), (ii) und (iii) rückstandsfrei löslich ist, abwiegt, in einen geeigneterweise inerten Rührkessel gibt und bevorzugt bei Raumtemperatur mischt. Behälter, Rührer und Kontaktgegenstände können beispielsweise - aber nicht ausschließlich - aus Quarzglas, aus emailierten Stahl oder einem gegenüber Peroxiden beständigen Stahl oder Kunststoff sein. So erhaltene erfindungsgemäße Zusammensetzungen sind in der Regel homogene klare einphasige leicht bewegliche Flüssigkeiten.

Eine so in einfacher und wirtschaftlicher Weise erhältliche erfindungsgemäße Zusammensetzung kann man aber auch auf ein Trägermaterial aufbringen bzw. in ein poröses, saugfähiges Trägermaterial einziehen lassen, beispielsweise durch Tauchen bzw. Imprägnieren. So kann man nach Abtropfen des getränkten Trägers, beispielsweise über einem Sieb, die erfindungsgemäße Zusammensetzung zusätzlich in einer homogenen rieselfähigen und leicht wäg- und dosierbaren festen geträgerten Form bereitstellen.

Erfindungsgemäße Zusammensetzungen eignen sich vorteilhaft zur Anwendung in einem Monosil-Verfahren mit thermoplastischen Polyolefinen.

Gegenstand der vorliegenden Erfindung ist somit auch ein Verfahren zur Herstellung von Produkten auf der Basis von thermoplastischen Polyolefinen, indem man eine erfindungsgemäße Zusammensetzung zusammen mit mindestens einem thermoplastischen Polyolefin in einem Monosil-Prozess umsetzt.

Geeigneterweise führt man das erfindungsgemäße Monosil-Verfahren durch, indem man mindestens ein thermoplastisches Polyolefin und eine erfindungsgemäße Zusammensetzung sowie optional weiterer Zusätze in einen beheizten Schneckenextruder dosiert, darin das geschmolzene Gemisch unter Temperatureinfluss behandelt, die geschmolzene Masse fördert und über ein Formwerkzeug extrudiert, das Extrudat zur Vernetzung in ein Wasserbad leitet und das Extrudat bis zur Formstabilität reagieren lässt und anschließend den so erhaltenen Formkörper trocknet.

Als thermoplastische Polyolefine im Sinne der Erfindung werden bevorzugt Polyethylen (PE) und Polypropylen (PP) verstanden, insbesondere die Typen PE-LL, PE-LD, PE-LLD, PE-VLD, PE-MD, PE-HD, m-PE sowie Mischungen aus mindestens zwei der zuvor genannten Polyolefine.

So kann man nach dem erfindungsgemäße Monosil-Verfahren z.B. Energiekabel für den Niederspannungs- und Mittelspannungsbereich, Kabel für den Solarbereich, flammgeschützte thermoplastische und vernetzte Kabel, Kabel für Unterwasser-Anwendungen, Sicherheitskabel für den Minenbereich, im Bereich des Transportwesens (z.B. S-Bahn, U-Bahn, Flughäfen), Seekabel, Kabel im Bereich der Ölgewinnung oder im Minenbereich, Automobilkabel, Nachrichtenkabel, Telekommunikationskabel als Formkörper bzw. Artikel Zinn-frei und mit hoher Qualität in vorteilhafter Weise herstellen. Auch für Peripherie-Anwendungen, wie z.B. Schrumpfschläuche für die Installation von Kabeln, kann das erfindungsgemäße Verfahren vorteilhaft genutzt werden.

Daher sind ebenfalls Gegenstand der vorliegenden Erfindung Formkörper bzw. Produkte, insbesondere Kabel, die nach dem erfindungsgemäßen Verfahren erhältlich sind.

Ferner ist Gegenstand der vorliegenden Erfindung die Verwendung einer erfindungsgemäßen Zusammensetzung für den Einsatz bei einem Monosil-Prozess zur Vernetzung von thermoplastischen Polyolefinen bei der Herstellung von mittels Extrusion geformter Produkte auf der Basis von thermoplastischen Polyolefinen, insbesondere oben genannte Kabel, wobei diese ungefüllt oder mit Füllstoffen gefüllt und/ oder mittels Farbstoffen oder Pigmenten eingefärbt sein können.

So bietet sich als Auswahl aus allen im Stande der Technik bekannten organischen Säuren gerade die 2-Ethylhexansäure [$H_3C(CH_2)_3CH(C_2H_5)COOH$] als Hydrolyse- und Vernetzungskatalysator in "Silanzubereitungen" bzw. erfindungsgemäßen Zusammensetzungen für den Einsatz im Monosil-Prozess zur Bereitstellung Zinn-freier Produkte auf der Basis thermoplastischer Polyolefine, insbesondere für Kabelanwendungen, vorteilhaft an, wobei sich so erhaltenen Produkte ganz besonders durch eine vergleichsweise hohe Oberflächenqualität bei gleichzeitig normgerechten Vernetzungseigenschaften auszeichnen.

**Beispiele:**

Die nachfolgenden Beispiele erläutern die vorliegende Erfindung, ohne den Gegenstand zu beschränken:

Definitionen

Carbonsäuren

Caprylsäure = Octansäure, $H_3C(CH_2)_6COOH$
Caprinsäure = Decansäure, $H_3C(CH_2)_8COOH$
Laurinsäure = Dodecansäure, $H_3C(CH_2)_{10}COOH$
Myristinsäure = Tetradecansäure, $H_3C(CH_2)_{12}COOH$
2-Ethylhexansäure = $H_3C(CH_2)_3CH(C_2H_5)COOH$

Tle = Teile

Diese Angabe bedeutet immer den Anteil (Gewichtsteile) des jeweiligen Additves bezogen auf 100 Tle Polymer - in dieser Studie beispielsweise Polyethylen (PE). Z.B. werden zu 100 Tle PE 1,4 Tle einer Silanmischung zugegeben. Umgerechnet in Prozent bedeutet das dann:
1,4 Tle Silanmischung/(100Tle PE + 1,4 Tle Silanmischung)x100 = 1,38 % Silanmischung im gesamten Polymercompound.

h = Stunde(n)

Gew.-% = Gewichtsprozent

Auftrommeln

Hierbei wird in eine runde Kunststofflasche aufgewärmtes Kunststoffgranulat - 1 h bei 70 °C im Umluftofen - gefüllt. Anschließend wird die für den Versuch benötigte Silanmischung auf das aufgewärmten Kunststoffgranulat gegeben und die Flasche auf einen Rollbock gestellt. Die runde Flasche wird nun für 1 h um ihre Längsachse in Rotation versetzt und somit der Gesamtinhalt der Kunstofflasche gemischt. Der warme Kunststoff saugt die Silanmischung auf und das Ergebnis nach 1 h ist ein trockenes rieselfähiges Kunststoffgranulat das die Silanmischung im benötigten bzw. geplanten Verhältnis enthält.

Zugstab / Probestab / Prüfkörper / Probekörper

Hierbei handelt es sich um einen Prüfkörper der aus einem extrudierten Band (Formkörper) mittels einer Stanzvorrichtung herausgestanzt wird. Die Form des Zugprüfstabs ist so gewählt, dass an den Außenenden die Breite des Stabes erheblich größer ist als im verjüngten mittleren Teil. Dies ermöglicht eine definierte Belastung im mittleren Teil des Stabes um die Reproduzierbarkeit der Messungen zu gewährleisten. In diesem mittleren, verjüngten Bereich werden die Messmarkierungen für den Hot-Set / Permanent-Set angebracht. Für die Berechnung des benötigten Belastungsgewichts wird die Querschnittsfläche (Breite x Dicke) des verjüngten Mittelteils verwendet, da hier die Belastung maximal auftritt. Für die Versuche wurden Probekörper des Typs 5A, gemäß DIN EN ISO 527-2:2012-06 Seite 10, verwendet.

Hot-Set

Ein Zugstab wird in einem natürlich belüfteten Trockenschrank einer definierten mechanischen Belastung ausgesetzt (0,2 MPa, 15 min bei 200 °C) und dabei die Längenänderung des Probestabes bestimmt. Das notwendige Belastungsgewicht für einen rechteckigen Zugstabsquerschnitt und einer vorgegebenen Belastung von 0,2 MPa errechnet sich folgendermaßen: Belastungsgewicht [g] = 20,387 x Zugstabbreite [mm] x Zugstabdicke [mm] (Breite und Dicke werden jeweils im verjüngten Bereich des Zugstabes gemessen). Das errechnete Gewicht wird an den entsprechenden Probestab angehängt und alles gemeinsam im Umluftofen bei 200 °C fixiert. Der Probestab wird vor der Lagerung mit zwei Markierungen markiert (20 mm Abstand). Nach 15 Minuten Lagerung des belasteten Probestabes wird der Abstand der Marken gemessen. Der Hot-Set ist somit die Wärmedehnung der belasteten Zugstäbe nach 15 Minuten bei 200 °C und einer Belastung von 0,2MPa. Der Hot-Set errechnet sich folgendermaßen:

$$\text{Hot-Set} = (L_{HS} - 20\ \text{mm})/20\text{mm} * 100\ [\%].$$

Hierbei bedeutet $L_{HS}$, den Abstand der Markierungen in mm nach den 15min Lagerung bei 200 °C und einer Belastung von 0,2 MPa. Hot-Set Werte ≤ 100 % entsprechen einer ausreichend guten Vernetzung.

Permanent-Set

Nach Bestimmung der Abstandsänderung der Markierungen der belasteten Probe nach 15 Minuten bei 200 °C und einer Belastung von 0,2 MPa im Trockenofen, also direkt im Anschluss an der Bestimmung des Hot-Sets, werden die Gewichte von den Zugstäben abgenommen und die Zugstäbe weitere 5 Minuten unbelastet bei 200 °C im Ofen weitergelagert. Nach fünf Minuten entnimmt man die Zugstäbe und lässt sie 5 Minuten lang bei Umgebungstemperatur abkühlen. Nun wird erneut der Abstand der Markierungen gemessen. Der Permanent-Set ist die Restdehnung der Markierung der vernetzten Zugstäbe. Der Permanent-Set errechnet sich folgendermaßen:

$$\text{Permanent-Set} = (L_{PS} - 20 \text{ mm})/20\text{mm} * 100.$$

Hierbei bedeutet $L_{PS}$, den Abstand der Markierungen am Zugstab nachdem der Probestab 5 min unbelastet bei 200 °C weitergelagert wurde und dieser dann abschließend 5 min bei RT abgekühlt wurde. Permanent-Set Werte $\leq$ 25 % entsprechen einer ausreichend guten Vernetzung.

**Beispiel 1 (Vergleichsbeispiel)**

Lösungsversuch Myristinsäure in Vinyltrimethoxysilan:

50 g Vinyltrimethoxysilan (VTMO) wurden in einer 100 ml Klarglasflasche vorgelegt. Anschließend wurde schrittweise die Myristinsäure dem Silan zugegeben und die Flasche mit der Hand geschüttelt bis sich eine klare Flüssigkeit eingestellt hat. Nachfolgend wurde die Silanzusammensetzung im Kühlschrank bei + 6 °C gelagert und von Zeit zu Zeit in Augenschein genommen. Die Details und die Ergebnisse sind in Tabelle 1 aufgeführt.

Tabelle 1: Lösungsuntersuchung von Myristinsäure in Vinyltrimethoxysilan

|  | Beispiel 1A |
| --- | --- |
|  | Myristinsäure in 50,08 g VTMO |
| Zugabe 1 bei Raumtemperatur: ca. 26 °C | Zugabemenge 3,5 g, klare Flüssigkeit, starkes Schütteln erforderlich |
| Zugabe 2 bei Raumtemperatur: ca. 26 °C | weitere Zugabemenge 0,29 g, klare Flüssigkeit, starkes Schütteln erforderlich |
| Lagerung über Nacht im Klimaraum bei ca. 23 °C | Die Flasche wurden über 17,1 Stunden im Klimaraum bei ca. 23 °C gelagert. Nach der Lagerung waren die Proben immer noch unverändert klar. |
| Zugabe 3 - Klimaraum: ca. 23 °C | weitere Zugabemenge 0,5 g klare Flüssigkeit, starkes Schütteln erforderlich |
| Lagerung im Kühlschrank bei ca. 6 °C | starke Ausfällungen nach 50 Minuten |
| Prozentualer Anteil an Katalysatorkomponente im VTMO | 7,8 Gew.-% |

Ergebnis aus Beispiel 1

Schon nach 50 Minuten bei 6 °C fällt ein Großteil der Myristinsäure in der Silanmischung aus. Eine stabile Silanmischung mit $\geq$ 7,8 Gew.-% Myristinsäure, die den realen Umgebungsbedingungen standhält, ist somit nicht möglich.

**Beispiel 2 (Vergleichsbeispiel)**

Lösungsuntersuchungen von Caprinsäure in Vinyltrimethoxysilan

Es wurden Mischungen von Vinyltrimethoxysilan und Caprinsäure in verschiedenen Verhältnissen angesetzt. Die Mischungen wurden in 20 ml Weißglasflaschen hergestellt. Es wurde solange gemischt bis sich eine stabile Lösung einstellte. Anschließend wurden die Flaschen bei 1 °C gelagert und nach 2 h, 3,5 h und 18 h die Flüssigkeiten begutachtet.

Tabelle 2: Ergebnisse der Mischungsuntersuchungen von Caprinsäure in Vinyltrimethoxysilan

| Einsatzstoffe | Beispiel 2A | | Beispiel 2B | | Beispiel 2C | | Beispiel 2D | |
| --- | --- | --- | --- | --- | --- | --- | --- | --- |
| Vinyltrimethoxysilan (VTMO) | 9 g | 90 Gew.-% | 8,5 g | 85 Gew.-% | 8 g | 80 Gew.-% | 7,5 g | 75 Gew.-% |
| Caprinsäure | 1 g | 10 Gew.-% | 1,5 g | 15 Gew.-% | 2 g | 20 Gew.-% | 2,5 g | 25 Gew.-% |

(fortgesetzt)

| Einsatzstoffe | Beispiel 2A | Beispiel 2B | Beispiel 2C | Beispiel 2D |
|---|---|---|---|---|
| Nach 2 h Lagerung bei 1 °C | Klare Lösung | Klare Lösung | Klare Lösung | Ausfällung, löst sich bei Raumtemperatur wieder auf |
| Nach 3,5 h Lagerung bei 1 °C | Klare Lösung | Klare Lösung | Klare Lösung | Ausfällung, löst sich bei Raumtemperatur wieder auf |
| Nach 18 h Lagerung bei 1 °C | Klare Lösung | Klare Lösung | Ausfällung, löst sich bei Raumtemperatur wieder auf | Ausfällung, löst sich bei Raumtemperatur wieder auf |

Ergebnis aus Beispiel 2

Auch die Caprinsäure ermöglicht nicht die Herstellung von VTMO-Lösungen mit einem höheren Katalysator- bzw. Säuregehalt, die gleichzeitig bei einer tiefen Lagertemperatur stabil sind.

**Beispiel 3**

Lösungsversuche von Caprylsäure und 2-Ethylhexansäure in ungesättigten Alkoxysilanen

Es wurden jeweils 4 g eines ungesättigten Alkoxysilane - Vinyltrimethoxysilan (VTMO), Vinyltriethoxysilan (VTEO), 3-Methacryloxypropyltrimethoxysilan (MEMO) jeweils mit 6g einer Carbonsäure (Caprylsäure und 2-Ethylhexansäure) und in einer 20 ml Weißglasflasche abgefüllt und durch schütteln gemischt. Anschließend wurden die Flaschen bei 1 °C gelagert und nach 18 h die Flüssigkeiten begutachtet. Die Ergebnisse sind in den Tabellen 3-1 und 3-2 dargestellt.

Tabelle 3-1: Übersicht der Ergebnisse der Lösungsuntersuchungen von 60 Gew.-% Caprylsäure in verschiedenen ungesättigten Alkoxysilanen

| Einsatzstoffe | Beispiel 3A | | Beispiel 3B | | Beispiel 3C | |
|---|---|---|---|---|---|---|
| Vinyltrimethoxysilan (VTMO) | 4 g | 40 Gew.-% | - | - | - | - |
| Vinyltriethoxysilan (VTEO) | - | - | 4g | 40 Gew.-% | - | - |
| 3-Methacryloxypropyltrimethoxysilan (MEMO) | - | - | - | - | 4 g | 40 Gew.-% |
| Caprylsäure | 6 g | 60 Gew.-% | 6g | 60 Gew.-% | 4 g | 60 Gew.-% |
| Bei Raumtemperatur | Klare Lösung | | Klare Lösung | | Klare Lösung | |
| Nach 18 h Lagerung bei 1 °C | Klare Lösung | | Klare Lösung | | Teilweise fest, löst sich bei Raumtemperatur wieder vollständig auf | |

Tabelle 3-2: Übersicht der Ergebnisse der Lösungsuntersuchungen von 60 Gew.-% 2-Ethylhexansäure in verschiedenen ungesättigten Alkoxysilanen

| Einsatzstoffe | Beispiel 3D | | Beispiel 3E | | Beispiel 3F | |
|---|---|---|---|---|---|---|
| Vinyltrimethoxysilan (VTMO) | 4 g | 40 Gew.-% | - | - | - | - |

(fortgesetzt)

| Einsatzstoffe | Beispiel 3D | | Beispiel 3E | | Beispiel 3F | |
|---|---|---|---|---|---|---|
| Vinyltriethoxysilan (VTEO) | - | - | 4 g | 40 Gew.-% | - | - |
| 3-Methacryloxypropyltrimethoxysilan (MEMO) | - | - | - | - | 4 g | 40 Gew.-% |
| 2-Ethylhexansäure | 6 g | 60 Gew.-% | 6 g | 60 Gew.-% | 4 g | 60 Gew.-% |
| Bei Raumtemperatur | Klare Lösung | | Klare Lösung | | Klare Lösung | |
| Nach 18 h Lagerung bei 1 °C | Klare Lösung | | Klare Lösung | | Klare Lösung | |

Ergebnis aus Beispiel 3

Es hat sich überraschenderweise gezeigt, dass alle Mischungen mit 2-Ethylhexansäure auch nach 18 h bei 1 °C, selbst bei einem Anteil von 60 Gew.-%, in allen untersuchten Silanen (VTMO, VTEO, MEMO) klare Lösungen blieben. Auch gegenüber der Caprylsäure zeigt sich im Falle der Materialkombination mit 40 Gew.-% Säure sowie MEMO + 60 Gew.-% Caprylsäure eine bessere Lösungscharakteristik der 2-Ethylhexansäure.

**Beispiel 4**

Lösungsuntersuchungen von Mischungen mit verschiedenen ungesättigten Alkoxysilanen, Peroxiden, Additiven und Carbonsäuren - Vergleich Caprylsäure mit 2-Ethylhexansäure

Es wurden Silanmischungen mit verschiedenen Additiven in 20 ml Weißglasflaschen hergestellt. Die Einsatzstoffe wurden gemischt (Magnetrührer, ca. 1 h bei Raumtemperatur) bis sich eine stabile Lösung einstellte. Anschließend wurden die Flaschen bei 1 °C gelagert und nach 3,5 h die Flüssigkeiten begutachtet. In Tabellen 4-1 (Versuche mit Caprylsäure) und Tabelle 4-2 (Versuche mit 2-Ethylhexansäure) sind die Mischungsansätze und die dazugehörigen Ergebnisse aufgelistet.

Tabelle 4-1: Mischungen mit verschiedenen ungesättigten Alkoxysilanen, Peroxiden, Additiven und Caprylsäure

| Einsatzstoffe | Beispiel 4A | | Beispiel 4B | | Beispiel 4C | |
|---|---|---|---|---|---|---|
| Vinyltrimethoxysilan (VTMO) | 5 g | 50 % | - | - | - | - |
| Vinyltriethoxysilan (VTEO) | - | - | 1,5 g | 15 % | - | - |
| 3-Methacryloxypropyltrimethoxysilan (MEMO) | - | - | - | - | 4,5 g | 45 % |
| Dicumylperoxid | 1 g | 10 % | - | - | - | - |
| 2,5-Dimethyl-2,5-di(tert-butylperoxy)-hexan | - | - | - | - | 1 g | 10 % |
| Di(tert-butylperoxyisopropyl)benzol | - | - | 1 g | 10 % | - | - |
| 2,6 Di-tert.-butyl-4-methylphenol | 1,5 | 15 % | - | - | - | - |
| Pentaerythrityl-tetrakis [3-(3,5-bis(1,1-dimethylethyl)-4-hydroxyphenyl)propionat] | - | - | - | - | 0,25 g | 2,5 % |
| 4,4-Bis-(1,1-dimethylbenzyl)-diphenylamin | - | - | - | - | 0,5 g | 5% |
| Tris-(2-tert.butyl-4-thio(-2'-methyl-4-hydroxy-5'-tert.butyl)phenyl-5-metyl) Phenylphosphit | - | - | - | - | 0,25 g | 2,5 % |
| 2,2,4-Trimethyl-1,2-dihydrochinolin, Polymerisiert (TMQ) | - | - | 1,5 g | 15 % | - | - |

(fortgesetzt)

| Einsatzstoffe | Beispiel 4A | | Beispiel 4B | | Beispiel 4C | |
|---|---|---|---|---|---|---|
| Caprylsäure | 2,5 | 25 % | 6 g | 60 % | 3,5 g | 35 % |
| Vor der Lagerung | Klare Lösung | | Rot-braune Lösung | | Klare Lösung | |
| Nach 3,5 h Lagerung bei 1 °C | Klare Lösung | | Rot-braune Lösung | | Klare Lösung | |
| Nach 18 h Lagerung bei 1 °C | Klare Lösung | | Rot-braun "gefroren" (fest) | | Klare Lösung | |

Tabelle 4-2: Mischungen mit verschiedenen ungesättigten Alkoxysilanen, Peroxiden, Additiven und 2-Ethylhexansäure

| Einsatzstoffe | Beispiel 4D | | Beispiel 4E | | Beispiel 4F | |
|---|---|---|---|---|---|---|
| Vinyltrimethoxysilan (VTMO) | 5 g | 50 % | - | - | - | - |
| Vinyltriethoxysilan (VTEO) | - | - | 1,5 g | 15 % | - | - |
| 3-Methacryloxypropyltrimethoxysilan (MEMO) | - | - | - | - | 4,5 g | 45 % |
| Dicumylperoxid | 1 g | 10 % | - | - | - | - |
| 2,5-Dimethyl-2,5-di(tert-butylperoxy)-hexan | - | - | - | - | 1 g | 10 % |
| Di(tert-butylperoxyisopropyl)benzol | - | - | 1 g | 10 % | - | - |
| 2,6 Di-tert.-butyl-4-methylphenol | 1,5 | 15 % | - | - | - | - |
| Pentaerythrityl-tetrakis [3-(3,5-bis(1,1-dimethylethyl)-4-hydroxyphenyl)propion at] | - | - | - | - | 0,25 g | 2,5 % |
| 4,4-Bis-(1,1-dimethylbenzyl)-diphenylamin | - | - | - | - | 0,5 g | 5 % |
| Tris-(2-tert.butyl-4-thio(-2'-methyl-4-hydroxy-5'-tert.butyl) phenyl-5-metyl) Phenylphosphit | - | - | - | - | 0,25 g | 2,5 % |
| 2,2,4-Trimethyl-1,2-dihydrochinolin, Polymerisiert (TMQ) | - | - | 1,5 g | 15 % | - | - |
| 2-Ethylhexansäure | 2,5 | 25 % | 6 g | 60 % | 3,5 g | 35 % |
| Vor der Lagerung | Klare Lösung | | Rot-braune Lösung | | Klare Lösung | |
| Nach 3,5 h Lagerung bei 1 °C | Klare Lösung | | Rot-Braune Lösung | | Klare Lösung | |
| Nach 18 h Lagerung bei 1 °C | Klare Lösung | | Rot-Braune Lösung | | Klare Lösung | |

Ergebnis aus Beispiel 4

Überraschenderweise hat 2-Ethylhexansäure, im Vergleich zur Caprylsäure, ein deutlich besseres Lösungsverhalten nach 18 h bei 1 °C gezeigt. Während im Fall der Caprylsäure die Mischung 4B (Tabelle 4-1) nach 18 h bei 1 °C "eingefroren" ist, blieb der Ansatz mit der 2-Ethylhexansäure (Beispiel 4E, Tabelle 4-2) unverändert in Lösung. 2-Ethylhexansäure zeigt somit auch hier eine bessere Lösungscharakteristik als Caprylsäure.

**Beispiel 5 (Vergleichsbeispiel)**

Silanvernetzung von PE-LLD mit Myristinsäure und DBTL als Katalysatoren:

Es wurde PE-LLD mit Silanzubereitungen basierend auf Vinyltrimethoxysilan, Dicumylperoxid und einem Vernetzungskatalysator mittels beheizbaren Schneckenextruder umgesetzt, geformt und anschließend unter Feuchteeinfluss vernetzt. Die beiden Silanzubereitungen sind in Tabelle 5-1 aufgelistet.

Tabelle 5-1: Silanzusammensetzung für die Extrusionsuntersuchung

|  | Beispiel 5A | Beispiel 5B |
|---|---|---|
| Vinyltrimethoxysilan | 87,6 Gew.-% | 84,4 Gew.-% |
| Dicumylperoxid | 7,9 Gew.-% | 7,6 Gew.-% |
| 2,6 Di-tert.-butyl-4-methylphenol | 1,0 Gew.-% | 1,0 Gew.-% |
| Dibutylzinndilaurat (DBTL) | 3,5 Gew.-% | - |
| Myristinsäure | - | 7,0 Gew.-% |

Die Extrusion erfolgte auf einem Doppelschneckenextruder (ZE25, Fa. Berstorff) mit einem I/d-Verhältnis von 33 und einem Schneckendurchmesser von d = 25 mm. Die Silanzusammensetzungen wurden dem Polyethylen (PE-LLD, LL 4004 EL, ExxonMobil Chemical) über einen Zeitraum von ca. 1 h aufgetrommelt. Vor dem Auftrommeln wurde das PE bei ca. 70 °C ca. 1 h lang aufgewärmt. Die Extrusion erfolgte bei einer Drehzahl von 100 U/min, mit folgendem Temperaturprofil: -/150/160/200/200/210/210/210 °C. Es wurde Band extrudiert. Die Bänder wurden in einem Wasserbad bei 80 °C, 6 h lang vernetzt. Vor der Messung des Hot-Set und des Permanent-Set wurden die vernetzten Probekörper 1 h bei 100 °C getrocknet. Die Ergebnisse bezüglich der Extrusionen sind in Tabelle 5-2 aufgelistet.

Tabelle 5-2: Ergebnisse der Vernetzungsuntersuchungen mit Myristinsäure und DBTL als Katalysatoren.

|  | Hot-Set [%] 0,2 MPa, 15min@200 °C | | Permanent-Set [%] 5min@200 °C, 5min@RT | |
|---|---|---|---|---|
|  | 1,4 Tle | 1,6 Tle | 1,4 Tle | 1,6 Tle |
| DBTL-Probe (Beispiel 5A) | 48 | 38 | 5 | 0 |
| Myristinsäure-Probe (Beispiel 5B) | gerissen | gerissen | - | - |

Ergebnis aus Beispiel 5

Der Myristinsäureanteil von 7 Gew.-% in der Silanmischung ist nicht ausreichend um eine ausreichend gut Vernetzungsdichte zur erreichen die dem Stand der Technik entspricht. Es muß Myristinsäure mit Anteilen deutlich > 7 Gew.-% eingesetzt werden um akzeptable Vernetzungsgrade zu erhalten. Aufgrund der Löslichkeitsgrenze von Myristinsäure in ungesättigten Alkoxysilanen (siehe Beispiel 1) ist man bei der Rezeptierung stark limitiert. Die Lösung der technischen Problemstellung ist mit dem Einsatz von Myristinsäure somit praktisch nicht möglich.

**Beispiel 6**

Silanvernetzung von PE-LLD mit 2-Ethylhexansäure als Katalysator im Vergleich zu Caprylsäure als Katalysator

Es wurden PE-LLD mit Silanformulierungen basierend auf Vinyltrimethoxysilan, Dicumylperoxid und einem Vernetzungskatalysator mittels beheizbaren Schneckenextruder umgesetzt, geformt und anschließend unter Feuchteeinfluss vernetzt. Es wurde die Katalysatoren 2-Ethylhexansäure und Caprylsäure miteinander vergleichend ausgeprüft. Die getesteten Silanzubereitungen sind in Tabelle 6-1 aufgelistet.

Tabelle 6-1: Silanzubereitungen für die Vernetzungsversuche im Monosil-Prozess - Caprylsäure und 2-Ethylhexansäure als Vernetzungskatalysatoren

| Einsatzstoffe | Beispiel 6A 9,1 Gew.-% 2-Ethylhexansäure | Beispiel 6B 25 Gew.-% Caprylsäure (Vergleichsbeispiel) | Beispiel 6C 25 Gew.-% 2-Ethylhexansäure |
|---|---|---|---|
| VinyltrimethoxySilan | 82,8 Gew.-% | 68,2 Gew.-% | 68,2 Gew.-% |
| 2,6-Di-tert.-butyl-4-methyl phenol | 0,9 Gew.-% | 0,4 Gew.-% | 0,4 Gew.-% |
| Dicumylperoxid | 7,2 Gew.-% | 6,4 Gew.-% | 6,4 Gew.-% |
| Caprylsäure | - | 25 Gew.-% | - |
| 2-Ethylhexansäure | 9,1 Gew.-% | - | 25 Gew.-% |

Die Extrusion erfolgte auf einem Doppelschneckenextruder (ZE25, Fa. Berstorff) mit einem l/d-Verhältnis von 33 und einem Schneckendurchmesser von d = 25 mm. Die Silanmischungen wurden dem Polyethylen (PE-LLD, LL 4004 EL, ExxonMobil Chemical) über einen Zeitraum von ca. 1 h aufgetrommelt. Vor dem Auftrommeln wurde das PE bei ca. 70 °C ca. 1 h lang aufgewärmt. Die Extrusion erfolgte bei einer Drehzahl von 100 U/min, mit folgendem Temperaturprofil: -/150/160/200/200/210/210/210 °C. Es wurde Band extrudiert. Die Bänder wurden in einem Wasserbad bei 80 °C, 6 h lang vernetzt. Vor der Messung des Hot-Set und des Permanent-Set wurden die vernetzten Probekörper 1 h bei 100 °C getrocknet. Die Ergebnisse der Extrusionen sind in Tabelle 6-2 aufgelistet.

Tabelle 6-2: Ergebnisse aus der Studie zur Verarbeitung und Vernetzung der von PE-LLD im Monosil-Verfahren, mit Caprylsäure und 2-Ethylhexansäure als Vernetzungskatalysatoren

| Zugabemenge Silanmischung | Beispiel 6A | Beispiel 6B | Beispiel 6C |
|---|---|---|---|
| | 9,1 Gew.-% 2-Ethylhexansäure | 25 Gew.-% Caprylsäure | 25 Gew.-% 2-Ethylhexansäure |
| | Kopfdruck (Mittelwerte) während der Extrusion [bar] | | |
| 1,2 Tle | 30 bar | Nicht extrudiert | 31 bar |
| 1,4 Tle | 32 bar | Nicht extrudiert | 33 bar |
| 1,6 Tle | 31 bar | 32 bar | 32 bar |
| 1,8 Tle | 30 bar | 45 bar | 33 bar |
| 2,0 Tle | 33 bar | 47 bar | 35 bar |
| Bandqualität (Alle Ansätze) | Glatte Oberflächen | Ausgefranst und wellig | Glatte Oberflächen |
| | Hot-Set (Mittelwerte, 6hz@80 °C, $H_2O$) [%] | | |
| 1,2 Tle | Nicht bestimmbar | Nicht extrudiert | 143 % |
| 1,4 Tle | 185 % | Nicht extrudiert | 95 % |
| 1,6 Tle | 97 % | 85 % | 71 % |
| 1,8 Tle | 73 % | 82 % | 75 % |
| 2,0 Tle | 70 % | 68 % | 73 % |
| | | | |
| | Permanent-Set (Mittelwerte, 6hz@80 °C, $H_2O$) [%] | | |
| 1,2 Tle | Nicht bestimmbar | Nicht extrudiert | 23 % |
| 1,4 Tle | 23 % | Nicht extrudiert | 15 % |
| 1,6 Tle | 12 % | 21 % | 8 % |
| 1,8 Tle | 10 % | 15% | 10 % |

(fortgesetzt)

| | Permanent-Set (Mittelwerte, 6hz@80 °C, $H_2O$) [%] | | |
|---|---|---|---|
| 2,0 Tle | 8 % | 13 % | 10 % |

Ergebnisse aus Beispiel 6

Es hat sich gezeigt, dass sowohl Caprylsäure als auch 2-Ethylhexansäure als Zinn-freie Katalysatoren eingesetzt werden können. Überraschenderweise hat sich während der Extrusion jedoch gezeigt, dass alle Ansätze mit 2-Ethylhexansäure, unabhängig von der Dosiermenge und im Vergleich zur Caprylsäure, eine Produkt-schonendere Verarbeitung ermöglichen. Das zeigt sich sehr deutlich an den Kopfdrücken am Extruderausgang während der Extrusion. Während alle Ansätze mit 2-Ethylhexansäure im Bereich von 30 bis 35 bar liegen, steigt der Kopfdruck bei den Ansätzen mit Caprylsäure signifikant von 32 auf 47 bar an. Der Grund für diese hohen Drücke ist eine erhöhte Schmelzeviskosität. Diese führt auch während der Extrusion bei den Ansätzen mit Caprylsäure zu unbefriedigenden rauen und ausgefransten Bändern bzw. Produkten. Die Bänder bzw. Produkte der Ansätze mit 2-Ethylhexansäure waren alle von hervorragender Qualität, bei gleichzeitig sehr hohen Vernetzungsgraden.

Ein erhöhter Kopfdruck bedeutet in der Praxis eine signifikant höhere Materialbelastung von Werkzeugen und dem Endprodukt, während der Produktion. Im Falle der Werkzeuge und Produktionsanlagen wiederum bedeutet dies einen deutlich höheren Verschleiß und einen deutliche höhere Wartungsfrequenz / Wartungsintensität. Im Falle der Extrudatoberflächen kommt es häufiger zu nicht akzeptablen, starken Defekten am Produkt. Die hohe Viskosität und die, im Fall der Caprylsäure-Mischungen, schwierigere Extrudierbarkeit wirkt sich auch stark auf die Extrusionsgeschwindigkeit aus und sie beeinflusst somit die Produktivität unmittelbar. Im Gegensatz hierzu kann mit den Mischungen mit 2-Ethylhexansäure mit deutlich höheren Geschwindigkeiten in hoher Qualität produziert werden, was in vorteilhafter Weise eine sehr hohe Produktivität und Produktqualität ermöglicht.

**Patentansprüche**

1. Zusammensetzung für den Einsatz bei einem Monosil-Prozess zur Vernetzung von thermoplastischen Polyolefinen,
   **dadurch gekennzeichnet,**
   **dass** die Zusammensetzung

   (i) einen Gehalt an 2-Ethylhexansäure [$H_3C(CH_2)_3CH(C_2H_5)COOH$] von 5 bis 60 Gew.-%,
   (ii) einen Gehalt an mindestens einem einfach ungesättigten organofunktionellen Alkoxysilan der allgemeinen Formel I

   $$A\text{-}SiR^2_x(OR^1)_{3-x} \qquad (I),$$

   wobei

   $R^1$ unabhängig voneinander für einen linearen oder verzweigten Kohlenwasserstoffrest mit 1 bis 4 C-Atomen steht,
   $R^2$ für Methyl steht und x gleich 0 oder 1 ist und
   A eine einwertige Olefin-Gruppe der Formel $(R^3)_2C=C(R^3)\text{-}M_k\text{-}$ mit k gleich 0 oder 1 darstellt, worin Gruppen $R^3$ gleich oder verschieden sind und $R^3$ ein Wasserstoffatom oder eine Methylgruppe ist und die Gruppe M einer Gruppe aus der Reihe $-CH_2-$, $-(CH_2)_2-$, $-(CH_2)_3-$ oder $-C(O)O-(CH_2)_3-$ entspricht,

   (iii) einen Gehalt an mindestens einem Radikalbildner und
   (iv) optional einen Gehalt an mindestens einer weiteren Komponente umfasst,

   wobei alle Komponenten (i) bis (iv) in Summe 100 Gew.-% ergeben.

2. Zusammensetzung nach Anspruch 1,
   **dadurch gekennzeichnet,**
   **dass** der Gehalt an 2-Ethylhexansäure als Komponente (i) 15 bis 45 Gew.-% beträgt.

3. Zusammensetzung nach Anspruch 1 oder 2,

**dadurch gekennzeichnet,**
**dass** der Gehalt an Komponente (ii) 15 bis 94,95 Gew.-% beträgt.

4.  Zusammensetzung nach einem der Ansprüche 1 bis 3,
    **dadurch gekennzeichnet,**
    **dass** der Gehalt an Komponente (iii) 0,05 bis 10 Gew.-% beträgt.

5.  Zusammensetzung nach Anspruch 4,
    **dadurch gekennzeichnet,**
    **dass** der Radikalbildner Komponente (iii) ein organisches Peroxid und/oder ein organischer Perester ist und ausgewählt aus der Reihe tert.-Butylperoxypivalat, tert.-Butylperoxy-2-ethylhexanoat, Dicumylperoxid, Di-tert.-butylperoxid, tert.-Butylcumylperoxid, Di(tert.-butylperoxy-isopropyl)benzol, 1,3-Di(2-tert.-butylperoxy-isopropyl)benzol , 1,4-Di(2-tert.-butylperoxy-isopropyl)benzol, 2,5-Dimethyl-2,5-bis(tert.-butylperoxy)hexin(3), Di-tert.-amylperoxid, 1,3,5-Tris(2-tert.-butylperoxy-isopropyl)benzol, 1-Phenyl-1-tert.-butylperoxyphthalid, alpha,alpha'-Bis(tert.-butylperoxy)-diisopropyl-benzol, 2,5-Dimethyl-2,5-di-tert.-butylperoxy-hexan, 1,1-Di(tert.-butylperoxy)-3,3,5-trimethylcyclohexan, n-Butyl-4,4-di(tert.-butylperoxy)valerat, Ethyl-3,3-di(tert.-butylperoxy)butytat, 3,3,6,9,9-Hexamethyl- 1,2,4,5-tetraoxa-cyclononan oder eine Mischung aus mindestens zwei der zuvor genannten Radikalbildner.

6.  Zusammensetzung nach einem der Ansprüche 1 bis 5,
    **dadurch gekennzeichnet,**
    **dass** die Zusammensetzung als Komponente (iv) mindestens einen Zusatzstoff und/oder Mischungen dieser enthält.

7.  Zusammensetzung nach einem der Ansprüche 1 bis 6,
    **dadurch gekennzeichnet,**
    **dass** die Zusammensetzung als Komponente (iv) mindestens einen Zusatzstoff aus der Reihe Pentaerythrityl- tetrakis [3-(3,5-bis(1,1-dimethylethyl)-4-hydroxyphenyl)propionate], 2,6 Di-tert.-butyl-4-methylphenol, Octadecyl- 3-(3,5-di-tert.butyl-4-hydroxyphenyl)propionat, 4,4'-Bis-(1,1-dimethylbenzyl)-diphenylamin, N,N'-Bis(3-(3,5-di- tert.butyl-4-hydroxyphenyl)-propionyl)hydrazin, 6,6'-Di-tert-butyl-2,2'thiodi-p-kresol, 1,3,5-Trimethyl-2,4,6-tris-(3,5- di-tert.butyl-4-hydroxybenzyl)benzol, Tris-(2-tert.-butyl-4-thio(-2 '-methyl-4-hydroxy-5'-tert.butyl)phenyl-5-methyl)phenylphosphit sowie 2,2,4-Trimethyl-1,2-dihydrochinolin (polymerisiert) umfasst.

8.  Zusammensetzung nach einem der Ansprüche 1 bis 7,
    **dadurch gekennzeichnet,**
    **dass** die Komponente (ii) ausgewählt ist aus der Reihe Vinyltrimethoxysilan, Vinyltriethoxysilan sowie 3-Methacryloxytrimethoxysilan.

9.  Zusammensetzung nach einem der Ansprüche 1 bis 8,
    **dadurch gekennzeichnet,**
    **dass** die Zusammensetzung

    (i) 9 bis 40 Gew.-% 2-Ethylhexansäure [$H_3C(CH_2)_3CH(C_2H_5)COOH$],
    (ii) 15 bis 88 Gew.-% Vinyltrimethoxysilan oder Vinyltriethoxysilan oder 3-Methacryloxypropyltrimethoxysilan,
    (iii) 3 bis 10 Gew.-% Dicumylperoxid und
    (iv) optional in Summe 0,05 bis 15 Gew.-% mindestens eines Zusatzstoffs oder mehrerer Zusatzstoffe

    umfasst,
    wobei alle Komponenten (i) bis (iv) in Summe 100 Gew.-% ergeben.

10. Zusammensetzung nach einem der Ansprüche 1 bis 9,
    **dadurch gekennzeichnet,**
    **dass** die Zusammensetzung als weitere Komponente (iv) 0 bis 10 Gew.-% eines Stabilisators oder Metalldesaktivators aus der Reihe Pentaerythrityl- tetrakis [3-(3,5-bis(1,1-dimethylethyl)-4-hydroxyphenyl)propionate], 2,6 Di- tert.-butyl-4-methylphenol, Octadecyl-3-(3,5-di-tert.butyl-4-hydroxyphenyl)propionat, 4,4'-Bis-(1,1-dimethylbenzyl)-diphenylamin, N,N'-Bis(3-(3,5-di-tert.butyl-4-hydroxyphenyl)-propionyl)hydrazin, 6,6'-Di-tert-butyl-2,2'thiodi-p- kresol, 1,3,5-Trimethyl-2,4,6-tris-(3,5-di-tert.butyl-4-hydroxybenzyl)benzol, Tris-(2-tert.-butyl-4-thio(-2 '-methyl-4- hydroxy-5'-tert.butyl)phenyl-5-methyl)phenylphosphit sowie 2,2,4-Trimethyl-1,2-dihydrochinolin (polymerisiert) enthält, wobei alle Komponenten (i) bis (iv) in Summe 100 Gew.-% ergeben.

**11.** Zusammensetzung nach einem der Ansprüche 1 bis 9,
**dadurch gekennzeichnet,**
**dass** die Zusammensetzung auf einem Träger bereitgestellt wird, wobei das Trägermaterial aus der Reihe der thermoplastischen Polyolefine oder der anorganischen Trägermaterialien ausgewählt ist und die Menge an Zusammensetzung, bezogen auf den Träger, 10 bis 50 Gew.-% beträgt.

**12.** Verfahren zur Herstellung von Produkten auf der Basis von thermoplastischen Polyolefinen, indem man eine Zusammensetzung nach einem der Ansprüche 1 bis 11 zusammen mit mindestens einem thermoplastischen Polyolefin in einem Monosil-Prozess umsetzt.

**13.** Monosil-Verfahren nach Anspruch 12,
**dadurch gekennzeichnet,**
**dass** man
mindestens ein thermoplastisches Polyolefin und eine Zusammensetzung nach einem der Ansprüche 1 bis 11 sowie optional weiterer Zusätze in einen beheizten Schneckenextruder dosiert, darin das geschmolzene Gemisch unter Temperatureinfluss behandelt, die geschmolzene Masse fördert und über ein Formwerkzeug extrudiert, das Extrudat zur Vernetzung in ein Wasserbad leitet und das Extrudat bis zur Formstabilität reagieren lässt und anschließend den so erhaltenen Formkörper trocknet.

**14.** Formkörper erhältlich nach Anspruch 12 oder 13.

**15.** Verwendung der Zusammensetzung nach einem der Ansprüche 1 bis 11, für den Einsatz beim Monosil-Prozess zur Vernetzung von thermoplastischen Polyolefinen bei der Herstellung von mittels Extrusion geformter Produkte, insbesondere Kabel, auf der Basis von thermoplastischen Polyolefinen, wobei diese ungefüllt oder mit Füllstoffen gefüllt und/ oder mittels Farbstoffen oder Pigmenten eingefärbt sein können.

**Claims**

**1.** Composition for use in a Monosil process for the crosslinking of thermoplastic polyolefins, **characterized in that** the composition comprises

(i) from 5 to 60% by weight content of 2-ethylhexanoic acid $[H_3C(CH_2)_3CH(C_2H_5)COOH]$,
(ii) content of at least one monounsaturated organofunctional alkoxysilane of the general formula I

$$A\text{-}SiR^2_x(OR^1)_{3-x} \qquad (I),$$

where

$R^1$ is mutually independently a linear or branched hydrocarbon moiety having from 1 to 4 C atoms,
$R^2$ is methyl and x is 0 or 1 and
A is a monovalent olefin group of the formula $(R^3)_2C=C(R^3)\text{-}M_k\text{-}$, where k is 0 or 1, in which groups $R^3$ are identical or different and $R^3$ is a hydrogen atom or a methyl group and the group M is a group from the following list: $-CH_2-, -(CH_2)_2-, -(CH_2)_3-$ and $-C(O)O-(CH_2)_3-$,

(iii) content of at least one free-radical generator and
(iv) optionally content of at least one other component,

where the entirety of all components (i) to (iv) gives 100% by weight.

**2.** Composition according to Claim 1,
**characterized in that**
the content of 2-ethylhexanoic acid as component (i) is from 15 to 45% by weight.

**3.** Composition according to Claim 1 or 2,
**characterized in that**
the content of component (ii) is from 15 to 94.95% by weight.

4. Composition according to any of Claims 1 to 3, **characterized in that**
the content of component (iii) is from 0.05 to 10% by weight.

5. Composition according to Claim 4,
**characterized in that**
the free-radical generator component (iii) is an organic peroxide and/or an organic perester, being selected from the following list: tert-butyl peroxypivalate, tert-butyl 2-ethylperoxyhexanoate, dicumyl peroxide, di-tert-butyl peroxide, tert-butyl cumyl peroxide, di(tert-butylperoxyisopropyl)benzene, 1,3-di(2-tert-butylperoxyisopropyl)benzene, 1,4-di(2-tert-butylperoxyisopropyl)benzene, 2,5-dimethyl-2,5-bis(tert-butylperoxy)hex-3-yne, di-tert-amyl peroxide, 1,3,5-tris(2-tert-butylperoxyisopropyl)benzene, 1-phenyl-1-tert-butylperoxyphthalide, alpha,alpha'-bis(tert-butylperoxy)diisopropylbenzene, 2,5-dimethyl-2,5-di-tert-butylperoxyhexane, 1,1-di(tert-butylperoxy)-3,3,5-trimethylcyclohexane, n-butyl 4,4-di(tert-butylperoxy)valerate, ethyl 3,3-di(tert-butylperoxy)butyrate, 3,3,6,9,9-hexamethyl-1,2,4,5-tetraoxacyclononane or a mixture of at least two of the abovementioned free-radical generators.

6. Composition according to any of Claims 1 to 5, **characterized in that**
the composition comprises, as component (iv), at least one additional substance and/or a mixture of these.

7. Composition according to any of Claims 1 to 6, **characterized in that**
the composition comprises, as component (iv), at least one additional substance from the following list: pentaerythrityl tetrakis[3-(3,5-bis(1,1-dimethylethyl)-4-hydroxyphenyl)propionate], 2,6-di-tert-butyl-4-methylphenol, octadecyl 3-(3,5-di-tert-butyl-4-hydroxyphenyl)propionate, 4,4'-bis(1,1-dimethylbenzyl)diphenylamine, N,N'-bis(3-(3,5-di-tert-butyl-4-hydroxyphenyl)propionyl)hydrazine, 6,6'-di-tert-butyl-2,2'-thiodi-p-cresol, 1,3,5-trimethyl-2,4,6-tris(3,5-di-tert-butyl-4-hydroxybenzyl)benzene, tris(2-tert-butyl-4-thio(2'-methyl-4-hydroxy-5'-tert-butyl)phenyl-5-methyl)phenyl phosphite and 2,2,4-trimethyl-1,2-dihydroquinoline (polymerized).

8. Composition according to any of Claims 1 to 7, **characterized in that**
component (ii) is selected from the following list: vinyltrimethoxysilane, vinyltriethoxysilane and 3-methacryloxytrimethoxysilane.

9. Composition according to any of Claims 1 to 8, **characterized in that**
the composition comprises

(i) from 9 to 40% by weight of 2-ethylhexanoic acid $[H_3C(CH_2)_3CH(C_2H_5)COOH]$,
(ii) from 15 to 88% by weight of vinyltrimethoxysilane or vinyltriethoxysilane or 3-methacryloxypropyltrimethoxysilane,
(iii) from 3 to 10% by weight of dicumyl peroxide and
(iv) optionally a total of from 0.05 to 15% by weight of at least one additional substance
or of a plurality of additional substances, where the entirety of all components (i) to (iv) gives 100% by weight.

10. Composition according to any of Claims 1 to 9, **characterized in that**
the composition comprises, as further component (iv), from 0 to 10% by weight of a stabilizer or metal deactivator from the following list: pentaerythrityl tetrakis[3-(3,5-bis(1,1-dimethylethyl)-4-hydroxyphenyl)propionate], 2,6-di-tert-butyl-4-methylphenol, octadecyl 3-(3,5-di-tert-butyl-4-hydroxyphenyl)propionate, 4,4'-bis(1,1-dimethylbenzyl)diphenylamine, N,N'-bis(3-(3,5-di-tert-butyl-4-hydroxyphenyl)propionyl)hydrazine, 6,6'-di-tert-butyl-2,2'-thiodi-p-cresol, 1,3,5-trimethyl-2,4,6-tris(3,5-di-tert-butyl-4-hydroxybenzyl)benzene, tris-(2-tert-butyl-4-thio(2'-methyl-4-hydroxy-5'-tert-butyl)phenyl-5-methyl)phenyl phosphite and 2,2,4-trimethyl-1,2-dihydroquinoline (polymerized), where the entirety of all components (i) to (iv) gives 100% by weight.

11. Composition according to any of Claims 1 to 9, **characterized in that**
the composition is provided on a carrier, where the quantity of composition is from 10 to 50% by weight, based on the carrier, and the carrier material is selected from the following list: thermoplastic polyolefins and inorganic carrier materials.

12. Process for the production of products based on thermoplastic polyolefins, by reacting a composition according to any of Claims 1 to 11 together with at least one thermoplastic polyolefin in a Monosil process.

13. Monosil process according to Claim 12,
**characterized in that**

at least one thermoplastic polyolefin and one composition according to any of Claims 1 to 11, and also optionally other additions, are metered into a heated screw-based extruder, the molten mixture is heated therein, the melt is conveyed and extruded by way of a die, the extrudate is passed into a water bath for crosslinking and the extrudate is permitted to react until dimensional stability is achieved and then the resultant moulding is dried.

14. Moulding obtainable according to Claim 12 or 13.

15. Use of the composition according to any of Claims 1 to 11 in the Monosil process for the crosslinking of thermoplastic polyolefins during the production of products moulded by means of extrusion, in particular cables, based on thermoplastic polyolefins, where these can be unfilled products or products filled with fillers and/or products coloured by means of dyes or by means of pigments.

**Revendications**

1. Composition destinée à une utilisation dans un procédé Monosil pour la réticulation de polyoléfines thermoplastiques, **caractérisée en ce que**
   la composition présente :

   (i) une teneur en acide 2-éthylhexanoïque [$H_3C(CH_2)_3CH(C_2H_5)COOH$] de 5 à 60 % en poids,
   (ii) une teneur en au moins un alcoxysilane organofonctionnel mono-insaturé de formule générale I

   $$A\text{-}SiR^2_x(OR^1)_{3-x} \qquad (I),$$

   dans laquelle

   les $R^1$ représentent indépendamment les uns des autres un radical hydrocarboné linéaire ou ramifié de 1 à 4 atomes C,
   $R^2$ représente méthyle, et x représente 0 ou 1, et
   A représente un groupe oléfine monovalent de formule $(R^3)_2C=C(R^3)\text{-}M_k\text{-}$ avec k = 0 ou 1, les groupes $R^3$ étant identiques ou différents, et $R^3$ étant un atome d'hydrogène ou un groupe méthyle, et le groupe M correspondant à un groupe de la série constituée par $-CH_2-$, $-(CH_2)_2-$, $-(CH_2)_3-$ ou $-C(O)O-(CH_2)_3-$,

   (iii) une teneur en au moins un agent de formation de radicaux, et
   (iv) éventuellement une teneur en au moins un autre composant,

   la somme de tous les composants (i) à (iv) étant de 100 % en poids.

2. Composition selon la revendication 1, **caractérisée en ce que** la teneur en acide 2-éthylhexanoïque en tant que composant (i) est de 15 à 45 % en poids.

3. Composition selon la revendication 1 ou 2, **caractérisée en ce que** la teneur en composant (ii) est de 15 à 94,95 % en poids.

4. Composition selon l'une quelconque des revendications 1 à 3, **caractérisée en ce que** la teneur en composant (iii) est de 0,05 à 10 % en poids.

5. Composition selon la revendication 4, **caractérisée en ce que** l'agent de formation de radicaux du composant (iii) est un peroxyde organique et/ou un perester organique, et est choisi dans la série constituée par le peroxypivalate de tert.-butyle, le peroxy-2-éthylhexanoate de tert.-butyle, le peroxyde de dicumyle, le peroxyde de di-tert.-butyle, le peroxyde de tert.-butylcumyle, le di(tert.-butylperoxy-isopropyl)benzène, le 1,3-di(2-tert.-butylperoxy-isopropyl)benzène, le 1,4-di(2-tert.-butylperoxy-isopropyl)benzène, le 2,5-diméthyl-2,5-bis(tert.-butylperoxy)hexine(3), le peroxyde de di-tert.-amyle, le 1,3,5-tris(2-tert.-butylperoxy-isopropyl)benzène, le 1-phényl-1-tert.-butylperoxyphthalide, l'alpha,alpha'-bis(tert.-butylperoxy)-diisopropyl-benzène, le 2,5-diméthyl-2,5-di-tert.-butylperoxy-hexane, le 1,1-di(tert.-butylperoxy)-3,3,5-triméthylcyclohexane, le 4,4-di(tert.-butylperoxy)valérate de n-butyle, le 3,3-di(tert.-butylperoxy)butyrate d'éthyle, le 3,3,6,9,9-hexaméthyl-1,2,4,5-tétraoxa-cyclononane ou un mélange d'au moins deux des agents de formation de radicaux susmentionnés.

**6.** Composition selon l'une quelconque des revendications 1 à 5, **caractérisée en ce que** la composition contient en tant que composant (iv) au moins un additif et/ou des mélanges de ceux-ci.

**7.** Composition selon l'une quelconque des revendications 1 à 6, **caractérisée en ce que** la composition contient en tant que composant (iv) au moins un additif de la série constituée par le tétrakis[3-(3,5-bis(1,1-diméthyléthyl)-4-hydroxyphényl)propionate] de pentaérythrityle, le 2,6-di-tert.-butyl-4-méthylphénol, le propionate d'octadécyl-3-(3,5-di-tert.butyl-4-hydroxyphényle), la 4,4'-bis-(1,1-diméthylbenzyl)-diphénylamine, la N,N'-bis(3-(3,5-di-tert.butyl-4-hydroxyphényl)-propionyl)hydrazine, le 6,6'-di-tert-butyl-2,2'-thiodi-p-crésol, le 1,3,5-triméthyl-2,4,6-tris-(3,5-di-tert.butyl-4-hydroxybenzyl)benzène, le tris-(2-tert.-butyl-4-thio(2'-méthyl-4-hydroxy-5'-tert.butyl)phényl-5-méthyl)phénylphosphite, ainsi que la 2,2,4-triméthyl-1,2-dihydroquinoline (polymérisée).

**8.** Composition selon l'une quelconque des revendications 1 à 7, **caractérisée en ce que** le composant (ii) est choisi dans la série constituée par le vinyltriméthoxysilane, le vinyltriéthoxysilane et le 3-méthacryloxytriméthoxysilane.

**9.** Composition selon l'une quelconque des revendications 1 à 8, **caractérisée en ce que** la composition comprend :

(i) 9 à 40 % en poids d'acide 2-éthylhexanoïque [$H_3C(CH_2)_3CH(C_2H_5)COOH$],
(ii) 15 à 88 % en poids de vinyltriméthoxysilane ou de vinyltriéthoxysilane ou de 3-méthacryloxypropyltriméthoxysilane,
(iii) 3 à 10 % en poids de peroxyde de dicumyle et
(iv) éventuellement au total 0,05 à 15 % en poids d'au moin un additif ou de plusieurs additifs,

la somme de tous les composants (i) à (iv) étant de 100 % en poids.

**10.** Composition selon l'une quelconque des revendications 1 à 9, **caractérisée en ce que** la composition contient en tant que composant (iv) supplémentaire 0 à 10 % en poids d'un stabilisateur ou désactivateur de métaux de la série constituée par le tétrakis[3-(3,5-bis(1,1-diméthyléthyl)-4-hydroxyphényl)propionate] de pentaérythrityle, le 2,6-di-tert.-butyl-4-méthylphenol, le propionate d'octadécyl-3-(3,5-di-tert.butyl-4-hydroxyphényle), la 4,4'-bis-(1,1-diméthylbenzyl)-diphénylamine, la N,N'-bis(3-(3,5-di-tert.butyl-4-hydroxyphényl)-propionyl)hydrazine, le 6,6'-di-tert-butyl-2,2'-thiodip-crésol, le 1,3,5-triméthyl-2,4,6-tris-(3,5-di-tert.butyl-4-hydroxybenzyl)benzène, le tris-(2-tert.-butyl-4-thio(2'-méthyl-4-hydroxy-5'-tert.butyl)phényl-5-méthyl)phénylphosphite, ainsi que la 2,2,4-triméthyl-1,2-dihydroquinoline (polymérisée), la somme de tous les composants (i) à (iv) étant de 100 % en poids.

**11.** Composition selon l'une quelconque des revendications 1 à 9, **caractérisée en ce que** la composition est préparée sur un support, le matériau support étant choisi dans le série constituée par les polyoléfines thermoplastiques et les matériaux supports inorganiques, et la quantité de composition, par rapport au support, étant de 10 à 50 % en poids.

**12.** Procédé de fabrication de produits à base de polyoléfines thermoplastiques, selon lequel une composition selon l'une quelconque des revendications 1 à 11 est mise en réaction conjointement avec au moins une polyoléfine thermoplastique dans un procédé Monosil.

**13.** Procédé Monosil selon la revendication 12, **caractérisé en ce qu'**au moins une polyoléfine thermoplastique et une composition selon l'une quelconque des revendications 1 à 11, ainsi qu'éventuellement d'autres additifs sont introduits dans une extrudeuse à vis chauffée, dans laquelle le mélange fondu est traité sous l'effet de la température, la masse fondue est transportée et extrudée par un outil de façonnage, l'extrudat est conduit dans un bain d'eau pour la réticulation, et l'extrudat est laissé réagir jusqu'à la stabilité de la forme, puis le corps moulé ainsi obtenu est séché.

**14.** Corps moulé pouvant être obtenu selon la revendication 12 ou 13.

**15.** Utilisation de la composition selon l'une quelconque des revendications 1 à 11, destinée à une utilisation dans le procédé Monosil pour la réticulation de polyoléfines thermoplastiques, lors de la fabrication de produits façonnés par extrusion, notamment de câbles, à base de polyoléfines thermoplastiques, celles-ci pouvant être non chargées ou chargées avec des charges et/ou colorées avec des colorants ou des pigments.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1963571 C3
- DE 2151270 C3
- US 3646155 A
- DE 2554525 C3
- US 4117195 A
- EP 207627 A
- JP 58013613 B
- JP 05162237 B
- JP 3656545 B
- JP 1042509 A
- JP 9040713 A
- WO 2010028876 A1
- EP 2465897 B1